# EUROPEAN PATENT APPLICATION

(11) **EP 3 328 004 A1**
(43) Date of publication of application: **30.05.2018**
(21) Application number: 16850381.1
(22) Date of filing: 29.09.2016
(51) Int. Cl.: H04L 12/46, H04L 29/12

(54) **BROADBAND ACCESS**

(30) Priority: 29.09.2015 CN 201510633853
(71) Applicant: New H3C Technologies Co., Ltd, Hangzhou, Zhejiang 310052 (CN)
(72) Inventor: TIAN, Yuan, Beijing 100085 (CN)
(74) Representative: dompatent von Kreisler Selting Werner - Partnerschaft von Patent- und Rechtsanwälten mbB
(86) International application number: PCT/CN2016/100825
(87) International publication number: WO 2017/054757

(57) **Abstract**

A network device for broadband accessing may receive a an VXLAN-encapsulated address request broadcast packet carrying client attribute information via a Virtual extensible LAN (VXLAN) tunnel, perform a VXLAN decapsulation to obtain an address request broadcast packet carrying client attribute information, and convert the address request broadcast packet into an address request unicast packet carrying the client attribute information and an identifier of the VXLAN tunnel for Internet Protocol (IP) address allocation. The network device may transmit the address request unicast packet to an address server, and receive an address response packet carrying an allocated IP address transmitted by the address server, perform a VXLAN encapsulation on the address response packet based on the VXLAN tunnel, and forward the VXLAN-encapsulated address response packet through the VXLAN tunnel.

## Description

### BACKGROUND

A broadband remote access server (BRAS) may serve as an access gateway of a broadband metropolitan area network, and perform authentication, accounting and management of subscriber services in coordination with an authentication system or an accounting system and so on. In order to differentiate subscriber services of different Point Of Presence (POP) nodes to provide different access services, the BRAS may avoid receiving packets having same Q-in-Q (802.1Q in 802.1Q) VLAN tags. In this way, subscriber services of different POP nodes may be differentiated. In some networks, a BRAS physical machine may be deployed on each POP node to identify subscriber services of each POP node.

### BRIEF DESCRIPTION OF THE DRAWINGS

FIG. 1 shows a schematic diagram of a network where a virtual broadband remote access server is deployed according to an example of this disclosure;
FIG. 2 shows, in an interactive diagram, a method for broadband accessing according to an example of this disclosure;
FIG. 3 shows, in an interactive diagram, a method for forwarding according to an example of this disclosure;
FIG. 4 is a schematic diagram illustrating a BRAS server according to an example of this disclosure;
FIG. 5 is a schematic diagram illustrating a DHCP server according to an example of this disclosure;
FIG. 6 is a schematic diagram illustrating a POP node according to an example of this disclosure.

### DETAILED DESCRIPTION OF THE EMBODIMENTS

Exemplary examples will be described in detail with reference to the accompanying drawings. The following description refers to the accompanying drawings in which the same reference numbers in different drawings represent the same or similar elements unless otherwise represented. The implementations set forth in the following description of exemplary examples do not represent all implementations consistent with this disclosure. Instead, they are merely examples of apparatuses and methods consistent with aspects related to the disclosure as recited in the appended claims.

A broadband access layer may be deployed with an optical network unit (ONU), an optical line terminal (OLT) and a Point Of Presence (POP) node. A data center is deployed with a virtual broadband remote access server (vBRAS), a dynamic host configuration protocol (DHCP) server and an AAA (Authentication, Authorization, Accounting) server. The VBRAS server of the data center may provide a plurality of virtual broadband remote access servers (vBRASes) and virtual switches through virtualization software (for example, Hypervisor). The VBRAS server may be implemented by means of a network device (not shown) such as an SDN controller. In this disclosure, a VXLAN network identifier (VNI) may be used as an identifier of a POP node to identify services from different POP nodes. In addition, the quantity of BRAS physical machines actually used may be reduced through deployment of the vBRAS.

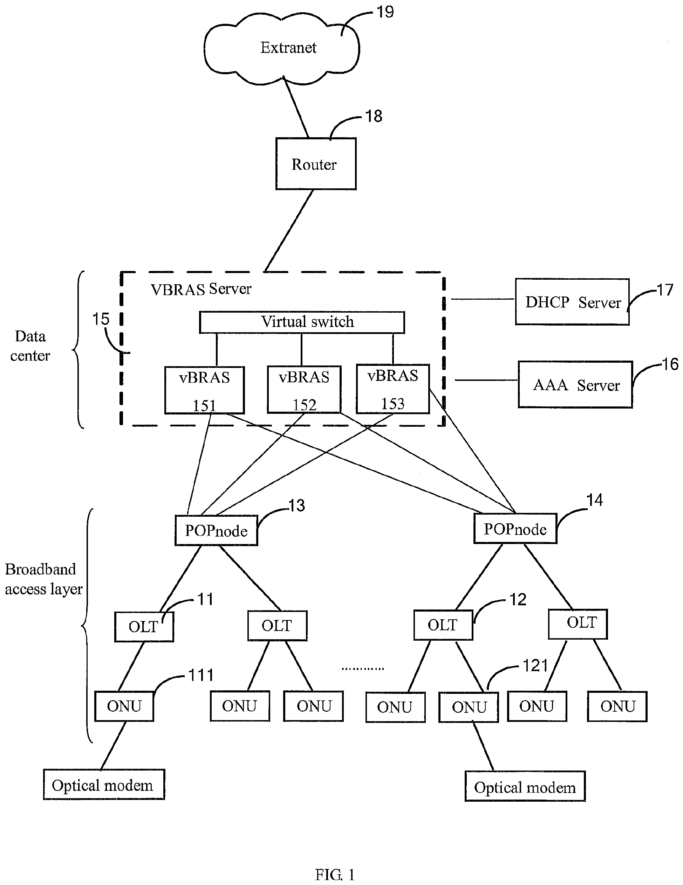

FIG. 1 schematically illustrates a diagram of a network where a virtual broadband remote access server is deployed according to an example of this disclosure.

In an example of FIG. 1, a VBRAS server 15 includes three vBRASes, respectively a vBRAS 151, a vBRAS 152 and a vBRAS 153, the three vBRASes may serve as DHCP relays and gateways.

Three VXLAN tunnels may be respectively established between a POP node 13 and the vBRASes 151-153, and VXLAN tunnel identifiers (VNIs) of the three tunnels are a VNI 131, a VNI 132 and a VNI 133 respectively. Three VXLAN tunnels may be respectively established between a POP node 14 and the vBRASes 151-153, and VNIs of the three VXLAN tunnels are a VNI 141, a VNI 142 and a VNI 143 respectively. Corresponding relationships between service VLAN (SVLAN) and VNI of each VXLAN tunnel may be pre-configured on the POP nodes 13 and 14.

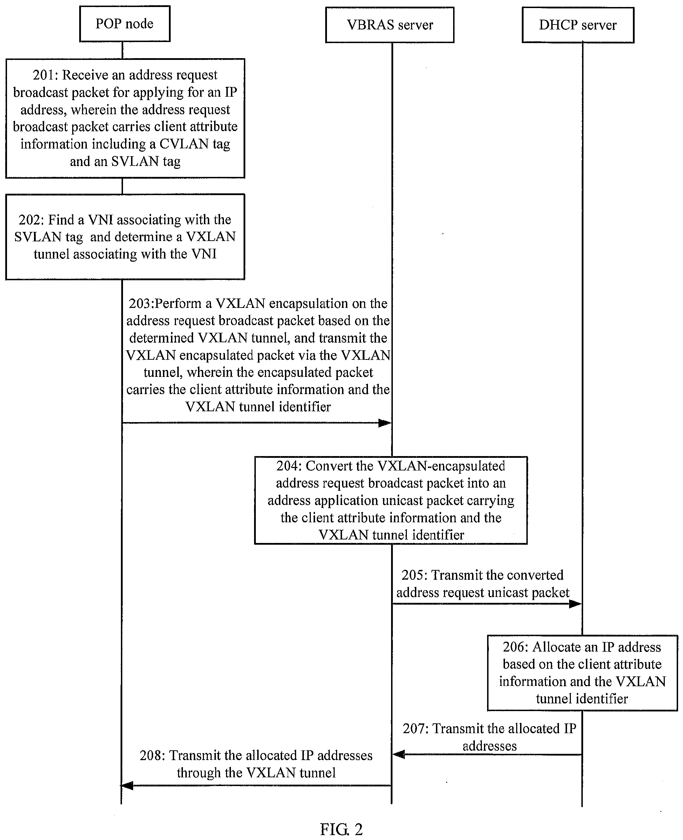

FIG. 2 shows, in an interactive diagram, a method for broadband accessing according to an example of this disclosure. The flowchart describes a process of acquiring, for a client, an IP address for accessing to broadband services.

At block 201, a POP node may receive an address request broadcast packet for applying for an IP address, wherein the address request broadcast packet carries client attribute information including a customer VLAN (CVLAN) tag and an SVLAN tag.

A client device, such as an optical modem connected with an ONU 111 in FIG. 1, may send a DHCP discover packet to apply for an IP address before accessing to broadband services. In one example, the ONU 111 may receive the DHCP discover packet, add a CVLAN tag into the received DHCP discover packet, and transmit the DHCP discover packet carrying the CVLAN tag to an OLT 11. The OLT 11 may add an SVLAN tag into the DHCP discover packet carrying the CVLAN tag and transmit the DHCP discover packet carrying the CVLAN tag and the SVLAN tag to the POP node 13.

At block 202, the POP node may find a VNI associating with the SVLAN tag and determine a VXLAN tunnel associating with the VNI.

For example, based on the pre-configured corresponding relationship between SVLAN and VNI, the POP node 13 may find the corresponding VNI 131, and determine that a VXLAN tunnel corresponding to the VNI 131 is a VXLAN tunnel between the POP node 13 and the vBRAS 151, as shown in FIG. 1.

At block 203, the POP node may perform a VXLAN encapsulation on the address request broadcast packet based on the determined VXLAN tunnel, and transmit the VXLAN encapsulated packet to a VBRAS server 15 via the determined VXLAN tunnel, wherein the encapsulated packet carries the client attribute information and the VXLAN tunnel identifier.

At the foregoing block 202, the POP node 13 may determine the VXLAN tunnel based on the SVLAN tag. The POP node 13 may encapsulate the DHCP discover packet carrying Q-in-Q VLAN tag, i.e. the client attribute information including the CVLAN tag and the SVLAN tag, into a VXLAN-encapsulated DHCP discover packet carrying the Q-in-Q VLAN tag, and transmit the VXLAN-encapsulated DHCP discover packet carrying the Q-in-Q VLAN tag to the vBRAS 151 through the VXLAN tunnel associating with the VNI 131.

The vBRAS 151 may receive the VXLAN-encapsulated DHCP discover packet carrying the Q-in-Q VLAN tag and the VNI through the VXLAN tunnel connecting with the POP node 13.

At block 204, the VBRAS server 15 may convert the VXLAN-encapsulated address request broadcast packet received into an address request unicast packet carrying the client attribute information and the VXLAN tunnel identifier.

For example, after receiving the VXLAN-encapsulated DHCP discover packet transmitted from the POP node 13, the vBRAS 151 in the VBRAS server 15 may perform a VXLAN decapsulation, convert the DHCP discover packet into a DHCP unicast packet, and record information including the Q-in-Q VLAN tag and the VNI 131 in an option82 of the DHCP unicast packet. The option82 of a DHCP packet also is referred to as a relay agent information option, which is an option in a DHCP packet and has a number of 82.

At block 205, the VBRAS server 15 may transmit the converted address request unicast packet to a DHCP server 17 serving as an address server.

At block 206, the address server 17 may allocate an IP address based on the client attribute information and the VXLAN tunnel identifier carried in the received address request unicast packet.

The DHCP server 17 may select an address pool to allocate the IP address based on the Q-in-Q VLAN tag and the VNI 131 in the option82 of the converted DHCP discover unicast packet.

When the optical modem connected with the ONU 121 in FIG. 1 requests for an IP address for broadband access, the ONU 121 may add a CVLAN tag into a DHCP discover packet from the optical modem and forward the DHCP discover packet carrying the CVLAN tag to an OLT 12. The OLT 12 may add an SVLAN tag into the DHCP discover packet carrying the CVLAN tag and forward the DHCP discover packet carrying the CVLAN tag and the SVLAN tag to the POP node 14. The POP node 14 may perform a VXLAN encapsulation on the received DHCP discover packet carrying the CVLAN tag and the SVLAN tag. The POP node 14 may find a VNI 141 associating with the SVLAN tag and determine that a VXLAN tunnel associating with the VNI 141 is a VXLAN tunnel between the POP node 14 and the vBRAS 151 shown in FIG. 1. In this way, if the CVLAN tag and the SVLAN tag carried in the DHCP discover packet received by the POP node 14 are the same as those carried in the DHCP discover packet received by the POP node 13, subscriber services can be differentiated based on different VNIs.

The POP node 14 may perform a VXLAN encapsulation on the DHCP discover packet carrying the Q-in-Q VLAN tag, wherein the VXLAN-encapsulated DHCP discover packet may carry the VNI 141. The POP node 14 may transmit the VXLAN-encapsulated DHCP discover packet to the vBRAS 151 through the VXLAN tunnel associating with the VNI 141. After receiving the DHCP discover packet transmitted by the POP node 14, the vBRAS 151 may perform a VXLAN decapsulation, and transmit the DHCP discover packet carrying the Q-in-Q VLAN tag and the VNI 141 to the AAA server 16. After the DHCP discover packet carrying the Q-in-Q VLAN tag and the VNI 141 is verified by the AAA server 16, the vBRAS 151 may convert the DHCP discover packet carrying the Q-in-Q VLAN tag and the VNI 141 into a DHCP unicast packet, and record information such as the Q-in-Q VLAN tag and the VNI 141 in the option82 of the DHCP unicast packet. The DHCP server 17 may select other address pools to allocate IP addresses based on the Q-in-Q VLAN tag and the VNI 141 in the option82.

In the example of this disclosure, even the DHCP discover unicast packets carry same Q-in-Q VLAN tags, but the he DHCP server 17 may differentiate services of different POP nodes based on different VNIs added by the vBRAS 151 and allocate IP addresses from different address pools to client devices accessing different POP nodes.

At block 207, the address server 17 may transmit the allocated IP addresses to the VBRAS server 15.

The DHCP server 17 may transmit a DHCP offer packet, i.e. an address response packet, responding to the DHCP discover packet to the VBRAS server 15. A virtual switch in the VBRAS server 15 may transmit the DHCP offer packet to the vBRAS 151.

At block 208, the VBRAS server 15 may transmit the allocated IP addresses to the POP nodes through the VXLAN tunnels.

The vBRAS 151 in the VBRAS server 15 may respectively encapsulate the received DHCP offer packets into VXLAN-encapsulated DHCP offer packets and transmit the VXLAN-encapsulated DHCP offer packets to the POP node 13 and the POP node 14 based on the VXLAN tunnel associating with the VNI 131 and the VXLAN tunnel associating with the VNI 141.

The POP node 13 may receive the VXLAN-encapsulated DHCP offer packet via the VXLAN tunnel associating with the VNI 131, decapsulate the VXLAN-encapsulated DHCP offer packet, and transmit the DHCP offer packets to optical modem connected with the ONU 111. The POP node 14 may receive the VXLAN-encapsulated DHCP offer packet via the VXLAN tunnel associating with the VNI 141, decapsulate the VXLAN-encapsulated DHCP offer packet, and transmit the DHCP offer packets to optical modem connected with the ONU 121. The two optical modems serving as client devices may obtain the allocated IP addresses and access to the broadband services by using the allocated IP addresses.

In another example, prior to block 204 to convert the address request broadcast packet into the address request unicast packet, after decapsulating the VXLAN-encapsulated DHCP discover packet, the vBRAS 151 may transmit the DHCP discover packet carrying the Q-in-Q VLAN tag and the VNI 131 to the AAA server 16. After the DHCP discover packet carrying the Q-in-Q VLAN tag and the VNI 131 is verified by the AAA server 16, the vBRAS 151 may convert the DHCP discover packet carrying the Q-in-Q VLAN tag and the VNI 131 into the DHCP unicast packet, and record information such as the Q-in-Q VLAN tag and the VNI 131 in the option82 of the DHCP unicast packet.

Compared with a traditional way, in this example, it is unnecessary to deploy a large number of BRAS servers, which greatly reduces cost. In another aspect, since VXLAN tunnels are used, different POP nodes may correspond to different VXLAN tunnel identifiers so that the DHCP server may differentiate services of different POP nodes with reference to the VXLAN tunnel identifiers, and a problem that it is unable to differentiate same Q-in-Q VLAN tags may not occur.

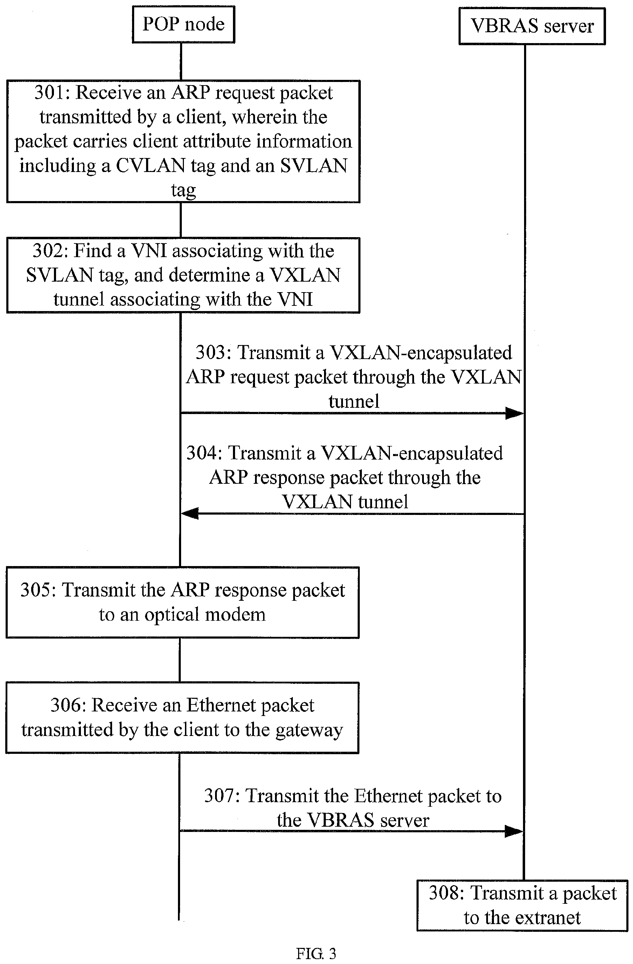

FIG. 3 shows, in an interactive diagram, a method of providing layer-3 forwarding for a client according to an example of this disclosure.

At block 301, the POP node may receive an ARP request packet sent by the client, wherein the packet carries client attribute information including a CVLAN tag and an SVLAN tag.

For example, an optical modem connected with the ONU 111 may transmit an ARP request packet for requesting MAC address of a gateway; the ONU 111 may receive the ARP request packet, add the CVLAN tag into the ARP request packet, and forward the ARP request packet carrying the CVLAN tag to the OLT 11. The OLT 11 may receive the ARP request packet carrying the CVLAN tag, add the SVLAN tag, and transmit the ARP request packet carrying the CVLAN tag and the SVLAN tag to the POP node 13.

At block 302, the POP node may find a VNI associating with the SVLAN tag carried in the received ARP request packet, and determine a VXLAN tunnel associating with the VNI.

Based on the pre-configured corresponding relationship between an SVLAN and a VNI, the POP node 13 may find a VNI 132 associating with the SVLAN tag in the received ARP request packet, and determine the VXLAN tunnel connecting the POP node 13 and the vBRAS 152 based on the VNI 132.

At block 303, the POP node may transmit the VXLAN-encapsulated ARP request packet to the VBRAS server 15 through the VXLAN tunnel.

The POP node 13 may determine the VXLAN tunnel connecting the POP node 13 and the vBRAS 152 based on the VNI 132 at block 302. The POP node 13 may perform a VXLAN encapsulation on the received ARP request packet based on the VXLAN tunnel, and transmit the encapsulated packet to the vBRAS 152 in the VBRAS server 15 through the VXLAN tunnel.

At block 304, the VBRAS server 15 may transmit a VXLAN-encapsulated ARP response packet to the POP node through the VXLAN tunnel.

After receiving the VXLAN-encapsulated ARP request packet, the vBRAS 152 in the VBRAS server 15 may perform a VXLAN decapsulation for the received packet. As a gateway, the vBRAS 152 may generate an ARP response packet based on the ARP request packet, perform a VXLAN encapsulation on the ARP response packet based on the VXLAN tunnel associating with the VNI 132, and transmit the VXLAN-encapsulated ARP response packet to the POP node 13 through the VXLAN tunnel.

At block 305, the POP node may transmit the ARP response packet to an optical modem.

The POP node 13 may receive the VXLAN-encapsulated ARP response packet, perform a VXLAN decapsulation for the received packet, and forward the decapsulated ARP response packet to the OLT 11. The OLT 11 may receive the ARP response packet and forward it to the ONU 111. The ONU 111 may receive the ARP response packet and forward it to an optical modem. When receiving the ARP response packet, the optical modem may learn an ARP entry including IP address and MAC address of the gateway based on sender IP address and sender MAC address carried in the ARP response packet.

At block 306, the POP node may receive an Ethernet packet sent by the client device to the gateway.

After the optical modem learns the ARP entry including the IP address of the gateway, an IP packet to be sent to an extranet may be encapsulated into an Ethernet packet of which destination MAC address is the MAC address of the gateway, and the encapsulated Ethernet packet may be sent to the ONU 111. The ONU 111 may receive the Ethernet packet sent to the gateway, add the CVLAN tag, and forward the Ethernet packet carrying the CVLAN tag to the OLT 11. The OLT 11 may receive the Ethernet packet carrying the CVLAN tag, add the SVLAN Tag, and transmit the Ethernet packet carrying the CVLAN tag and the SVLAN tag to the POP node 13.

At block 307, the POP node may transmit the Ethernet packet to be sent to the extranet to the VBRAS server 15.

When receiving the Ethernet packet sent to the gateway, the POP node 13 may find a VNI 131 associating with the SVLAN tag carried in the Ethernet packet to determine a VXLAN tunnel associating with the VNI 131, perform a VXLAN encapsulation on the Ethernet packet, and transmit the encapsulated VXLAN packet to the vBRAS 151 in the VBRAS server 15 through the VXLAN tunnel.

At block 308, the VBRAS server 15 may transmit a packet to the extranet.

After receiving the VXLAN-encapsulated Ethernet packet through the VXLAN tunnel associating with the POP node 13, the vBRAS 151 in the VBRAS server 15 may perform a VXLAN decapsulation for the received VXLAN-encapsulated Ethernet packet, and determine to implement layer-3 forwarding based on the destination MAC address of the Ethernet packet. The vBRAS 151 as a gateway may remove Ethernet header of the Ethernet packet, and may find a next hop IP address to arrive at destination IP address of an inner IP packet. In the example of FIG. 1 of this disclosure, a router 18 is a next hop router device to arrive at an extranet 19. Based on an MAC address of the router 18, the vBRAS 151 may re-encapsulate an IP packet to be sent to the extranet 19 into an Ethernet packet and transmit the re-encapsulated Ethernet packet to the router 18 by means of a virtual switch, and the IP packet may be sent by the router 18 to the extranet 19.

In the foregoing access flow, the VBRAS server in the examples of this disclosure may serve as a gateway, and may receive a packet to access to an extranet through VXLAN tunnels between POP nodes, and forward the packet to the extranet. A virtual VBRAS may be used in this broadband access service, which saves cost, and provide a simple and convenient implementation. Furthermore, in the broadband access service, the problem of high cost caused by deployment of a BRAS physical machine may be solved, and the cost of a broadband access service may be reduced.

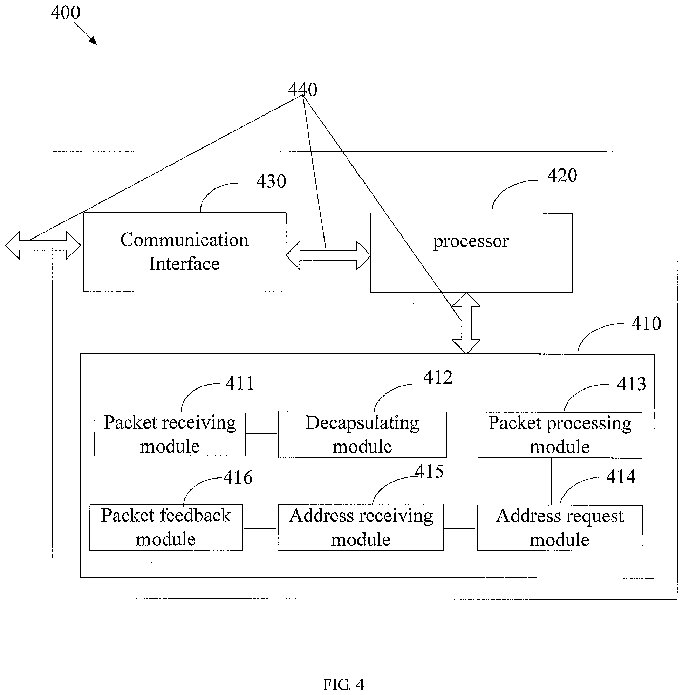

FIG.4 is a schematic diagram illustrating a BRAS sever 400 based on an example of the present disclosure. To execute the method for broadband accessing according to examples of this disclosure, an apparatus 400 may serve as a BRAS server. As shown in FIG. 4, the apparatus 400 may include: a storage medium 410, a processor 420, a communication interface 430 and coupling mechanism 440 that couples the storage medium 410, the processor 420 and the communication interface 430. The storage medium 410 may store multiple machine-readable instruction modules executed by the processor 420. The machine-readable instruction modules may include a packet receiving module 411, a decapsulating module 412, a packet processing module 413, an address request module 414, an address receiving module 415 and a packet feedback module 416.

The packet receiving module 411 is to receive a VXLAN-encapsulated address request broadcast packet carrying client attribute information through a VXLAN tunnel.

The decapsulating module 412 is to perform a VXLAN decapsulation to obtain an address request broadcast packet carrying client attribute information.

The packet processing module 413 is to convert the address request broadcast packet into an address request unicast packet, wherein the address request unicast packet carries the client attribute information and an identifier of the VXLAN tunnel for Internet Protocol (IP) address allocation.

The address request module 414 is to transmit the address request unicast packet to an address server.

The address receiving module 415 is to receive an address response packet which carries an allocated IP address and is sent by the address server.

The packet feedback module 416 is to perform a VXLAN encapsulation on the address response packet based on the VXLAN tunnel, and forward the VXLAN-encapsulated address response packet through the VXLAN tunnel.

In another example, prior to converting the address request broadcast packet into an address request unicast packet by the packet processing module 413, the decapsulating module 412 may transmit the address request broadcast packet carrying the client attribute information to an AAA (Authentication, Authorization, Accounting) server for verifying. Afterward, the packet processing module 413 may receive a response indicating that the address request broadcast packet is verified by the AAA server.

Further, the packet receiving module 411 is also to receive a VXLAN-encapsulated ARP request packet through the VXLAN tunnel.

The decapsulating module 412 is further to perform a VXLAN decapsulation to obtain an ARP request packet. The packet processing module 413 is to generate an ARP response packet in response to the ARP request packet.

The packet feedback module 416 is further to perform a VXLAN encapsulation on the ARP response packet based on the VXLAN tunnel, and forward the VXLAN-encapsulated ARP response packet through the VXLAN tunnel.

Further, the packet receiving module 411 is also to receive a VXLAN-encapsulated Ethernet packet from a client through the VXLAN tunnel.

The decapsulating module 412 is further to perform a VXLAN decapsulation to obtain an Ethernet packet.

The packet processing module 413 is further to obtain an inner IP packet of the Ethernet packet, determine a next hop IP address to arrive at a destination IP address of the inner IP packet, re-encapsulate the inner IP packet into a new Ethernet packet and transmit the new Ethernet packet to the next hop IP address.

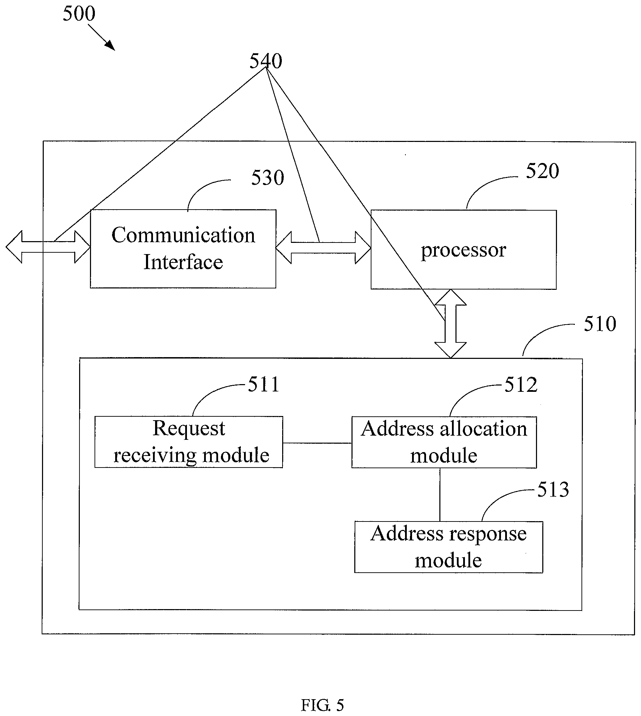

Fig.5 is a schematic diagram illustrating a DHCP sever based on an example of the present disclosure. As shown in FIG. 5, the DHCP sever 500 may include a storage medium 510, a processor 520, a communication interface 530 and coupling mechanism540 that couples the storage medium 510, the processor 520 and the communication interface 530. The storage medium 510 may store multiple machine-readable instruction modules executed by the processor 520. The machine-readable instruction modules may include: a request receiving module 511, an address allocation module 512 and an address response module 513.

The request receiving module 511 is to receive an address request unicast packet carrying client attribute information and a VXLAN tunnel identifier.

The address allocation module 512 is to allocate an IP address based on the client attribute information and the VXLAN tunnel identifier carried in the address request unicast packet.

The address response module 513 is to send an address response packet carrying an allocated IP address to a client.

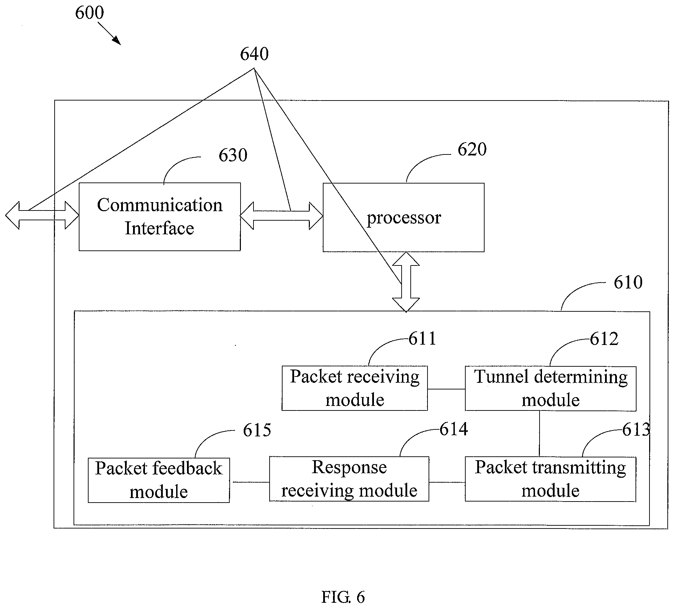

Fig. 6 is a schematic diagram illustrating a POP node 600 based on an example of the present disclosure. As shown in FIG. 6, the POP node may include: a storage medium 610, a processor 620, a communication interface 630 and coupling mechanism 640 that couples the storage medium 610, the processor 620 and the communication interface 630. The storage medium 610 may store multiple machine-readable instruction modules executed by the processor 620. The machine-readable instruction modules may include a packet receiving module 611, a tunnel determining module 612, a packet transmitting module 613, a response receiving module 614 and a packet feedback module 615.

The packet receiving module 611 is to receive an address request broadcast packet carrying a service virtual local area network (SVLAN) tag.

The tunnel determining module 612 is to find a Virtual extensible LAN (VXLAN) network identifier (VNI) associating with the SVLAN tag and determine a VXLAN tunnel associating with the VNI.

The packet transmitting module 613 is to perform a VXLAN encapsulation to obtain a VXLAN-encapsulated address request broadcast packet, and transmit the VXLAN-encapsulated address request broadcast packet through the VXLAN tunnel.

The response receiving module 614 is to receive, through the VXLAN tunnel, a VXLAN-encapsulated address response packet.

The packet feedback module 615 is to perform a VXLAN decapsulation to obtain an address response packet and forward the address response packet based on destination address of the address response packet.

Further, the packet receiving module 611 is also to receive an Ethernet packet carrying the SVLAN tag.

The tunnel determining module 612 is further to find the VNI associating with the SVLAN tag and determine the VXLAN tunnel associating with the VNI.

The packet transmitting module 613 is further to perform a VXLAN encapsulation on the Ethernet packet based on the VXLAN tunnel and transmit the VXLAN-encapsulated Ethernet packet through the VXLAN tunnel.

Implementations of functions and roles of units in the above device specifically refer to corresponding blocks in the above method, and are not described herein.

Apparatus examples are basically associating with method examples, thus method examples can serve as reference. The apparatus examples set forth above are merely exemplary, where units described as detached parts can be or not be detachable physically; parts displayed as units can be or not be physical units, i.e., either located at the same place, or distributed on a plurality of network units. Modules can be selected in part or in whole based on the actual needs for realization of solutions of this disclosure. It is conceivable and executable for those of ordinary skill in the art without creative labor.

The examples set forth above are only illustrated as preferred examples of this disclosure, and are not intended to limit this disclosure. All modifications, equivalent substitutions and improvements made within the spirit and principles of this disclosure shall fall within the protection scope of this disclosure.

## Claims

1. A method for broadband accessing, comprising:
receiving, by a network device providing broadband access service, an VXLAN-encapsulated address request broadcast packet carrying client attribute information via a Virtual extensible LAN (VXLAN) tunnel;
performing, by the network device, a VXLAN decapsulation to obtain an address request broadcast packet carrying client attribute information;
converting, by the network device, the address request broadcast packet into an address request unicast packet carrying the client attribute information and an identifier of the VXLAN tunnel for Internet Protocol (IP) address allocation;
transmitting, by the network device, the address request unicast packet to an address server;
receiving, by the network device, an address response packet carrying an allocated IP address transmitted by the address server;
performing, by the network device, a VXLAN encapsulation on the address response packet based on the VXLAN tunnel; and
forwarding, by the network device, the VXLAN-encapsulated address response packet through the VXLAN tunnel.

2. The method according to claim 1, wherein prior to converting the address request broadcast packet into an address request unicast packet, comprises:
transmitting, by the network device, the address request broadcast packet carrying client attribute information to an Authentication, Authorization, Accounting (AAA) server for verifying;
receiving, by the network device, a response indicating that the address request broadcast packet is verified by the AAA server.

3. The method according to claim 1, further comprising:
receiving, by the network device, a VXLAN-encapsulated ARP request packet from a client through the VXLAN tunnel;
performing, by the network device, a VXLAN decapsulation to obtain an ARP request packet;
generating, by the network device, an ARP response packet in response to the ARP request packet;
performing, by the network device, a VXLAN encapsulation on the ARP response packet based on the VXLAN tunnel; and
forwarding, by the network device, the VXLAN-encapsulated ARP response packet through the VXLAN tunnel.

4. The method according to claim 1, further comprising:
receiving, by the network device, a VXLAN-encapsulated Ethernet packet from a client through the VXLAN tunnel;
performing, by the network device, a VXLAN decapsulation to obtain an Ethernet packet, and obtaining an inner IP packet of the Ethernet packet;
determining, by the network device, a next hop IP address to arrive at a destination IP address of the inner IP packet;
re-encapsulating, by the network device, the inner IP packet into a new Ethernet packet; and
transmitting, by the network device, the new Ethernet packet to the next hop IP address.

5. An apparatus for broadband accessing, comprising: a processor and a storage medium storing machine-executable instructions associating with a control logic for broadband access, wherein by executing the machine-executable instructions the processor is caused to:
receive a VXLAN-encapsulated address request broadcast packet carrying client attribute information via a Virtual extensible LAN (VXLAN) tunnel;
perform a VXLAN decapsulation to obtain an address request broadcast packet carrying the client attribute information;
convert the address request broadcast packet into an address request unicast packet carrying the client attribute information and an identifier of the VXLAN tunnel for Internet Protocol (IP) address allocation;
transmit the address request unicast packet to an address server;
receive an address response packet carrying an allocated IP address transmitted by the address server;
perform a VXLAN encapsulation on the address response packet based on the VXLAN tunnel; and
forward the VXLAN-encapsulated address response packet through the VXLAN tunnel.

6. The apparatus according to claim 5, wherein prior to converting the address request broadcast packet into an address request unicast packet, the machine-executable instructions further cause the processor to:
transmit the address request broadcast packet to an Authentication, Authorization, Accounting (AAA) server;
receive a response indicating that the address request broadcast packet is verified by the AAA server.

7. The apparatus according to claim 5, wherein the machine-executable instructions further cause the processor to:
receive a VXLAN-encapsulated ARP request packet from a client through the VXLAN tunnel;
perform a VXLAN decapsulation to obtain an ARP request packet;
generate an ARP response packet in response to the ARP request packet;
perform a VXLAN encapsulation on the ARP response packet based on the VXLAN tunnel; and
forward the VXLAN-encapsulated ARP response packet through the VXLAN tunnel.

8. The apparatus according to claim 5, wherein the machine-executable instructions further cause the processor to:
receive a VXLAN-encapsulated Ethernet packet from a client through the VXLAN tunnel;
perform a VXLAN decapsulation to obtain an Ethernet packet;
obtain an inner IP packet of the Ethernet packet;
determine a next hop IP address to arrive at a destination IP address of the inner IP packet;
re-encapsulate the inner IP packet into a new Ethernet packet; and
transmit the new Ethernet packet to the next hop IP address.

9. An apparatus being a Point Of Presence (POP) node for broadband accessing, comprising:
a processor and
a storage medium storing machine-executable instructions associating with a control logic for broadband accessing,
wherein by executing the machine-executable instructions, the processor is caused to:
receive an address request broadcast packet carrying a service virtual local area network (SVLAN) tag;
find a Virtual extensible LAN (VXLAN) network identifier (VNI) associating with the SVLAN tag and determine a VXLAN tunnel associating with the VNI;
perform a VXLAN encapsulation to obtain a VXLAN-encapsulated address request broadcast packet;
transmit the VXLAN-encapsulated address request broadcast packet through the VXLAN tunnel;
receive a VXLAN-encapsulated address response packet through the VXLAN tunnel;
perform a VXLAN decapsulation to obtain an address response packet; and
forward the address response packet based on destination address of the address response packet.

10. The apparatus according to claim 9, wherein the machine-executable instructions further cause the processor to:
receive an Ethernet packet carrying the SVLAN tag;
find the VNI associating with the SVLAN tag and determine the VXLAN tunnel associating with the VNI;
perform a VXLAN encapsulation on the Ethernet packet based on the VXLAN tunnel; and
transmit the VXLAN-encapsulated Ethernet packet through the VXLAN tunnel.
